(19) **Europäisches Patentamt European Patent Office Office européen des brevets**

(11) **EP 2 069 723 B1**

(12) **EUROPEAN PATENT SPECIFICATION**

(45) Date of publication and mention of the grant of the patent:
**01.09.2021 Bulletin 2021/35**

(51) Int Cl.:
**G01F 1/66** *(2006.01)*     **G01F 1/708** *(2006.01)*
**G01F 1/712** *(2006.01)*

(21) Application number: **07810865.1**

(22) Date of filing: **27.07.2007**

(86) International application number:
**PCT/US2007/016944**

(87) International publication number:
**WO 2008/013957 (31.01.2008 Gazette 2008/05)**

(54) **APPARATUS FOR ATTENUATING ACOUSTIC WAVES PROPAGATING WITHIN A PIPE WALL**

VORRICHTUNG ZUR DÄMPFUNG VON IN EINER ROHRWAND ÜBERTRAGENEN SCHALLWELLEN

APPAREIL POUR ATTÉNUER LES ONDES ACOUSTIQUES SE PROPAGEANT À L'INTÉRIEUR D'UNE PAROI DE TUBE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.07.2006 US 833651 P**

(43) Date of publication of application:
**17.06.2009 Bulletin 2009/25**

(73) Proprietor: **Expro Meters, Inc.**
**Wallingford, CT 06492 (US)**

(72) Inventors:
• **GYSLING, Daneil L.**
**Glastonbury, CT 06033 (US)**
• **FERNALD, Mark**
**Enfield, CT 06082 (US)**
• **BAILEY, Timothy J.**
**Longmeadow, MA 01106 (US)**

• **DANG, Changjiu**
**Wallingford, CT 06492 (US)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
| | |
|---|---|
| **EP-A2- 1 291 620** | **EP-B1- 1 955 019** |
| **EP-B1- 1 993 742** | **WO-A-00/60317** |
| **WO-A-03/023330** | **WO-A1-2005/061997** |
| **DE-A1-102005 057 888** | **JP-A- 61 028 821** |
| **US-A- 4 454 767** | **US-A- 5 131 279** |
| **US-A- 5 131 279** | **US-A1- 2002 100 327** |
| **US-A1- 2004 199 340** | |

## Description

### Cross-Reference To Related Patent Applications

The present application relates to U.S. Patent Application No. 10/756,977 (US 2004/0199340 A1), filed January 13, 2004, and U.S. Provisional Patent Application No. 60/833,651, filed July 27, 2006, U.S. Provisional Patent Application No. 60/856,243, filed November 1, 2006, and U.S. Provisional 60/856,987, filed November 6, 2006.

### Technical Field

This invention relates to a method and apparatus for attenuating acoustic waves (or ring around acoustics) propagating through the walls of a pipe for a clamp-on ultrasonic flow meter.

### Background

Most ultrasonic flow measurements seek to leverage information contained in fluid borne disturbances of a specific temporal frequency. The specific frequency often results from natural frequencies of the drive electronics, the transducer, or the resonant transmission characteristic of the pipe wall.

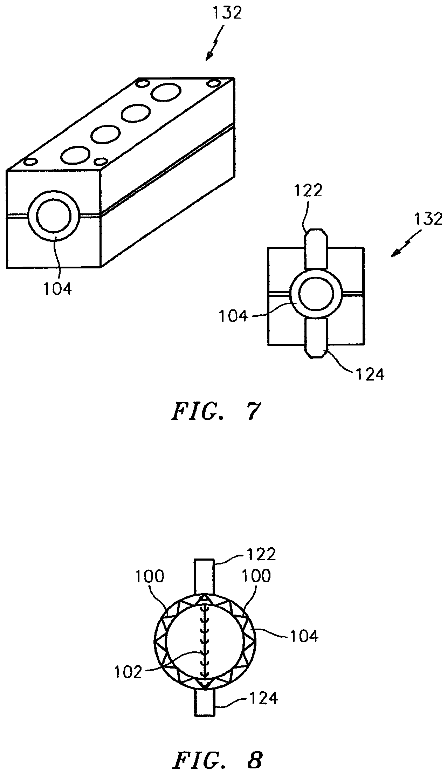

Referring to **Figure 8,** one of the primary challenges associated with clamp-on ultrasonic flow metering is the interference between the structurally borne ultrasonic signal component 100 and the desired fluid borne ultrasonic signal component 102. The structurally borne component 100 of the ultrasonic signal is often of the same or similar frequency and essentially masks the fluid borne component 102 of the ultrasonic signal.

Standard pipes are fairly effective waveguides for structurally borne acoustics components 100. The ultrasonic pulse propagates along the wall of a pipe 104 with very little damping and rings around the circumference numerous times until the inherent damping in the pipe and the propagation of energy axially away from the initial excitation eventually dissipates the structurally borne ultrasonic waves.

WO 2005/061997 A1 describes an ultrasonic flowmeter with two ultrasonic transmitter/receivers. The transmitter/receivers have tubular transmitters surrounding the measurement pipe through which a fluid to be measured flows and fixed to the outer surface of the measurement pipe and ultrasonic transducers provided at a distance from the outer surface of the measurement pipe. The transmitter has axial end surfaces vertical to the axis of the measurement pipe. An axial end surface of the ultrasonic transducer is secured to the axial end surface of the transmitter. A voltage is applied between the axial end surfaces to expand/contract the ultrasonic transducer in the axial direction.

DE 10 2005 057 888 A1 discloses an apparatus designed for determining and/or monitoring the volume flow or mass flow of a medium, which flow through a pipe made of a predefined material in the direction of the longitudinal axis of the pipe. The apparatus has at least one ultrasonic sensor, which is fixed in a defined measuring position on the outer wall of the pipe and which emits and/or receives ultrasonic measuring signals, and a control/evaluation unit, which determines the volume flow or mass flow of the medium in the pipe according to the time-of-flight method, the cross-correlation method or the Doppler method. The ultrasonic sensor has a housing, a piezoelectric element and a propagation body consisting of at least two positive-locking sub-elements, the sub-elements of the propagation body being designed in such a way that the ultrasonic measuring signals are focused on a selected area of the pipe. The materials of the sub-elements of the propagation body are selected in such a way that the transmission of the ultrasonic measuring signals to the sonic path running through the propagation body is maximum, and that the housing is designed in such a way that interference signals are damped in the propagation body or in the wall of the pipe, wherein an interior wall of the housing has a serrated or corrugated structure for damping interference signals at least in the area of the propagation body.

### Summary of the Invention

The invention provides an apparatus for damping an ultrasonic signal propagating in the wall of a pipe according to independent claim 1. Optional features of such an apparatus are defined in the dependent claims.

### Brief Description of the Drawings

Referring now to the drawing wherein like items are numbered alike in the various Figures:

Figure 1 is a block diagram of a flow meter having an array of ultrasonic sensor units disposed axially along a pipe for measuring the volumetric flow of the fluid flowing in the pipe, in accordance with the present invention.

Figure 2 is a cross-sectional view of a pipe having a turbulent pipe flowing having coherent structures therein, in accordance with the present invention.

Figure 3 is a block diagram of an alternative embodiment of a sensing device of a flow meter which is not part of the present invention.

Figure 4 is a block diagram of an alternative embodiment of a sensing device of a flow meter embodying the present invention similar to that shown in Figure 1.

Figure 5 is a block diagram of an alternative embodiment of a sensing device of a flow meter which is not part of the present invention.

Figure 6 is a block diagram of an alternative embodiment of a sensing device of a flow meter which is not part of the present invention.

Figure 7 is a perspective and cross-sectional view of an embodiment of a structurally significant housing clamped on to a pipe, in accordance with the present invention.

Figure 8 is a cross-sectional view of structurally borne and fluid borne components propagating through a pipe wall having an ultrasonic sensor attached thereto.

Figure 9 is a cross-sectional view of wrapped and unwrapped pipe wall having a housing in accordance with the present invention and one embodiment having no housing.

Figure 9B is a table illustrating diaphragm diameter and ultrasonic frequency as a function of wall thickness.

Figure 10 is cross-sectional view and an expanded view of a structurally significant housing in accordance with another embodiment of the present invention.

Figure 11 is cross-sectional view and a perspective view of a structurally significant housing in accordance with another embodiment of the present invention.

Figure 12A is an elevational view and a cross-sectional view of a another embodiment of the present invention having piezoelectric patches for damping structurally borne ultrasonic signals in accordance with present invention.

Figure 12B is an elevational view and a cross-sectional view of the embodiment of Figure 12A.

Figure 12C is an elevational view and a cross-sectional view of the embodiment of Figure 12A.

Figure 12D is an elevational view and a cross-sectional view of the embodiment of Figure 12A.

Figure 13 is a block diagram of a flow logic used in the apparatus of the present invention.

Figure 14 is a k-ω plot of data processed from an apparatus embodying the present invention that illustrates slope of the convective ridge, and a plot of the optimization function of the convective ridge.

Figure 15 is a block diagram of an apparatus for measuring the vortical field or other flow characteristics of a process flow within a pipe, in accordance with the present invention.

Figure 16 is a plot of a signal created by a 1 MHz ultrasonic signal a transducer, in accordance with the present invention.

Figure 17 is a cross-sectional view of structurally borne and fluid borne components propagating through a pipe wall having an ultrasonic sensor attached thereto

Figure 18 is a plot of a received ultrasonic signal along with an unwanted 'ring-around' signal, in accordance with the present invention.

Figure 19 is a cross-sectional view of structurally borne and fluid borne components propagating through a pipe wall having an ultrasonic sensor attached thereto.

Figure 20 is a plot showing the phase velocity of supported circumferential modes with the wall of a pipe, in accordance with the present invention.

Figure 21 is a cross-sectional view of structurally borne and fluid borne components propagating through a pipe wall having an ultrasonic sensor attached thereto and having a pair of block epoxied to the pipe wall to attenuate the ring-around signal, in accordance with the present invention.

Figure 22 is a plot showing the received signal with and without epoxied ring-around blocks.

Figure 23 is a diagram illustrating the flow of ultrasonic energy injected into a pipe without ring-reducing blocks.

Figure 24 is a diagram illustrating the flow of ultrasonic energy injected into a pipe with ring-reducing blocks.

**Detailed Description**

The present invention discloses apparatus' and methods for reducing the impact of structurally borne noise, an unintended by-product of launching the fluid born ultrasonic interrogation pulse, on the operation of clamp-on flow ultrasonic flow meters, as described in U.S. Patent Application No. 10/756,977 (US 2004/0199340 A1), filed January 13, 2004.

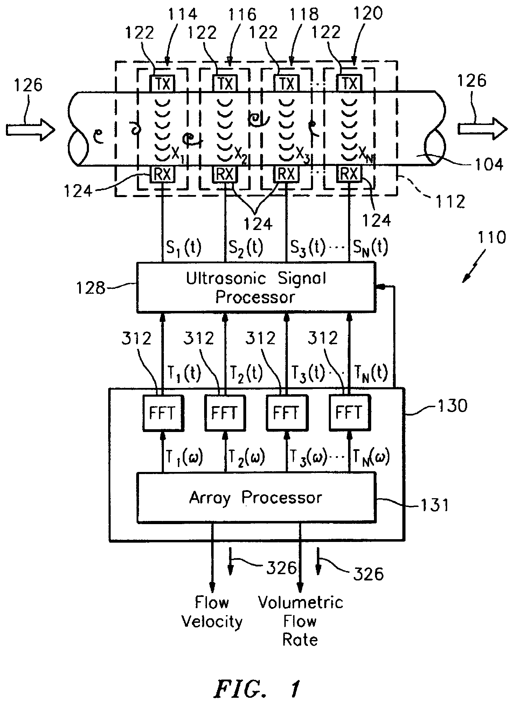

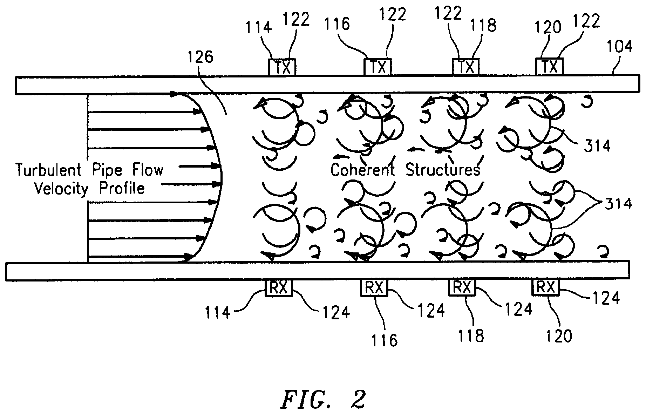

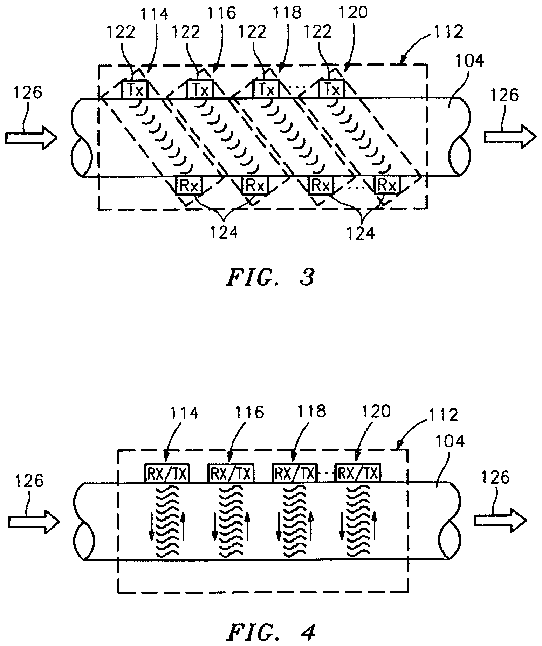

Figures 1 and 2 illustrate an ultrasonic clamp-on flow meter 110, as described in U.S. Patent Application No. 10/756,977 (US 2004/0199340 A1), wherein the ultrasonic flow meter 110 includes an array of ultrasonic sensors 112 having a plurality of ultrasonic sensors 114-120 disposed axially along the length of the pipe 104. Each ultrasonic sensor 114-120 comprises a transmitter 122 and a receiver 124. The transmitter 122 provides an ultrasonic signal to the corresponding receiver 124, wherein the ultrasonic signal is orthogonal to the direction of the flow of a fluid 126. Other embodiments, such as that described and taught in U.S. Patent Application No. 10/756,977 (US 2004/0199340 A1), include embodiments in non-orthogonal ultrasonic signals, pitch and catch configurations, pulse echo configurations, and combined transmitter/receiver ultrasonic sensors, as shown in Figures 3-6.

For example, while each of the ultrasonic sensor units 114-120 comprises a pair of ultrasonic sensors (transmitter and receiver) 122, 124 are diametrically-opposed to provide through transmission, one of the ultrasonic sensors 122, 124 of each sensor unit 114-120 may be offset axially such that the ultrasonic signal from the transmitter sensor has an axial component in its propagation direction, as shown in Figure 3. The embodiments depicted in Figures 3, 5, and 6 are not part of the claimed invention.

As shown in Figure 4, the present invention contemplates that the sensor units 114-120 of the sensing device 112 may be configured in a pulse/echo configuration. In this embodiment, each sensing unit 114-120 comprises one ultrasonic sensor that transmits an ultrasonic signal through the pipe wall and fluid substantially orthogonal to the direction of flow and receives a reflection of the ultrasonic signal reflected back from the wall of the pipe to the ultrasonic sensor.

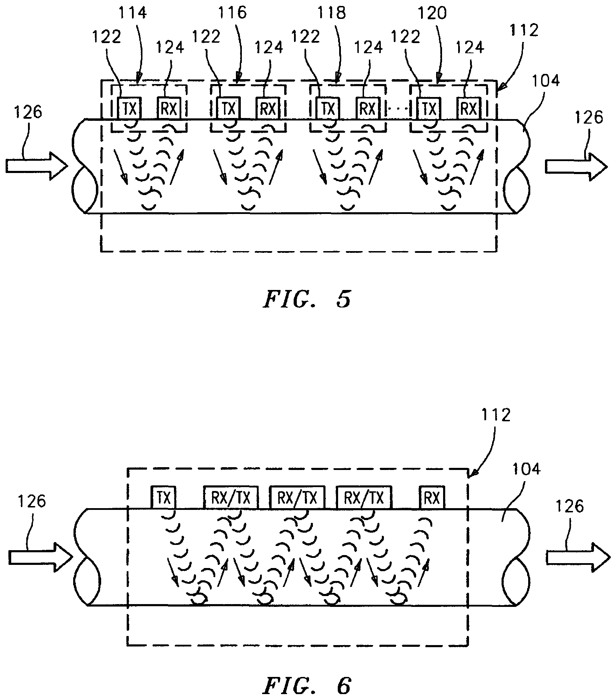

Referring to Figure 5, the sensing device 112 may be configured to function in a pitch and catch configuration. In this embodiment, each sensor unit 114-120 comprises a pair of ultrasonic sensors (transmitter, receiver) 122, 124 disposed axially along the pipe 104 disposed on the same side of the pipe 104 at a predetermined distance apart. Each transmitter sensor 122 provides an ultrasonic signal at a predetermined angle into the flow 126. The ultrasonic signal propagates through the fluid 126 and reflects off of the inner surface of the pipe 104 and reflects the ultrasonic signal back through the fluid 126 to the respective receiver sensor 124.

Figure 6 shows another pitch and catch configuration for the sensing device 112. This configuration is similar to that shown in Figure 5 except that the sensors disposed between the end sensors function as both a transmitter and a receiver. This pitch and catch configuration reduces the number of sensors needed to operate.

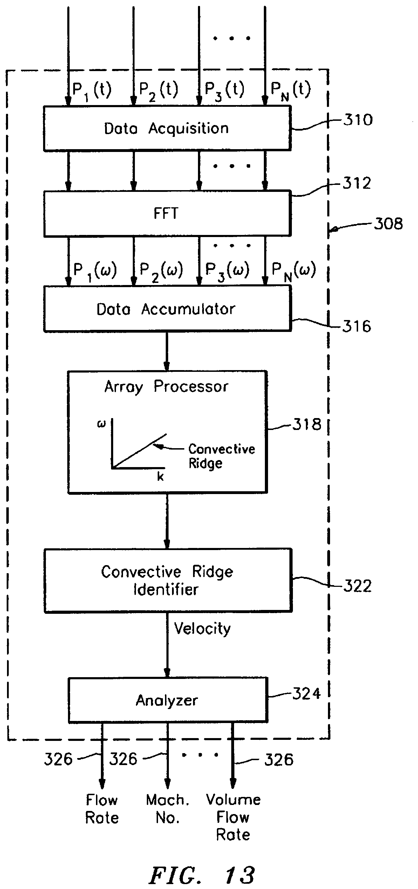

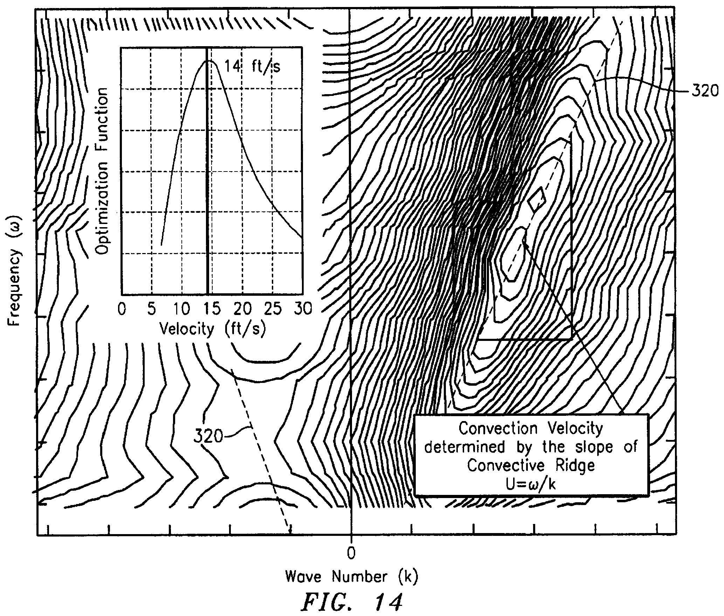

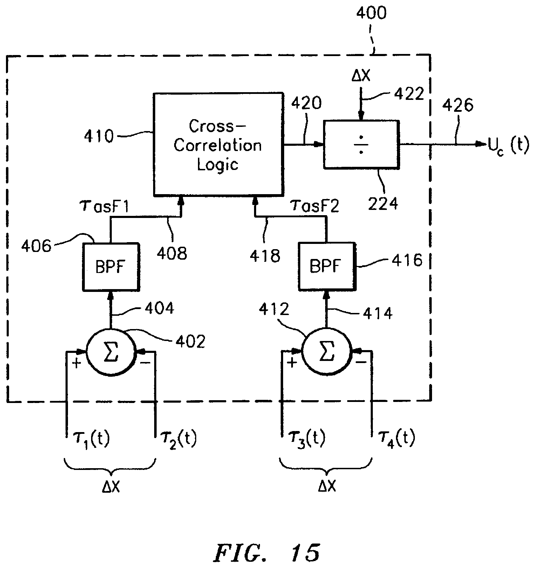

Referring back to Figure 1, the signals $S_t(t)$-$S_N(t)$ received from each ultrasonic sensor 114-120 are processed by an ultrasonic signal processor 128 and a signal processor 130 (having an array processor 131) for determining the velocity of the fluid flow and/or volumetric flow rate. The signal processor 130 includes at least one of array processing logic, as will be described in greater detail hereinafter (See Figures 13 and 14); and cross-correlation processing logic, as also will be described in greater detail hereinafter (Figure 15).

One should appreciate that the present invention is applicable to at least all the configurations of an ultrasonic flow meter considered herein (as well as others not described herein), and will be described in greater detail hereinafter.

Specifically, the present invention teaches complimentary approaches to attenuating or eliminating the structurally borne component 100 of the ultrasonic signal. For example, one embodiment comprises a structurally significant housing, and a second embodiment including piezoelectric films applied to the outer surface of the pipe 104 to damp out the structurally borne ultrasonic vibrations.

The first embodiment, as shown in Figure 7, involves the use of a structurally significant housing 132 to clamp-on to the outside of the process piping 104. The housing 132 is structurally significant in terms of mass and stiffness as compared to the pipe 104 itself and once the clamp-on ultrasonic meter 110 (see Figure 1) (including the housing 132) is mounted to the pipe 104, the housing 132 and pipe 104 wall essentially form a single structural body at the ultrasonic excitation frequencies of interest. The idea is to clamp the structurally significant housing 132 to the pipe 104 with sufficient force, possibly with the addition of epoxy, to effectively modify the ultrasonic vibrational characteristics of the pipe 104.

More specifically, the structurally significant housing 132 essentially modifies the structural properties of the entire structural path (or substantially the entire path) between the transmitting and the receiving ultrasonic transducers 122, 124. The structurally significant housing 132 contacts and reinforces all areas of the pipe 104 except for the immediate area of the transmitting and receiving transducers 122, 124. Given that the flexural stiffness of a plate scales with the cube of the thickness of the plate, doubling the effective wall thickness increases the effective flexural stiffness by a factor of 8. Thus, as one rule of thumb, this invention considers doubling the flexural stiffness by at least 2x as being "significant" and thus a structural housing 132 of the same material as the pipe 104 need only result in a -25% increase in effective pipe 104 wall thickness to be considered significant. Thus, the present invention enhances the relative ability of the transmitting and receiving sensors 122, 124 to communicate through the fluid 126 with respect to the structurally borne fluid path.

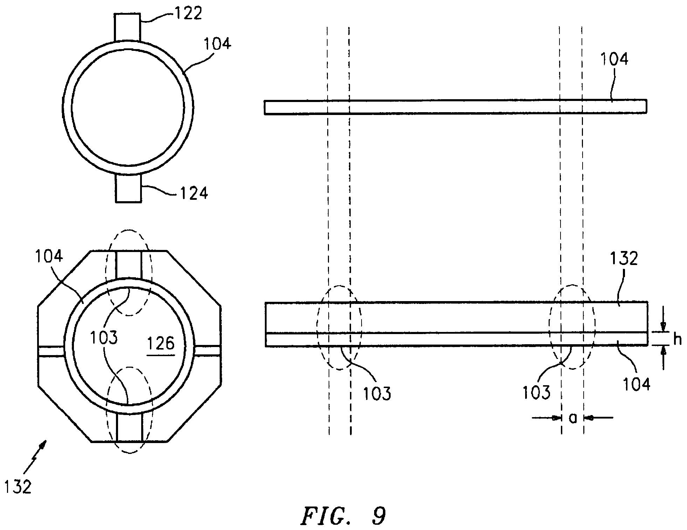

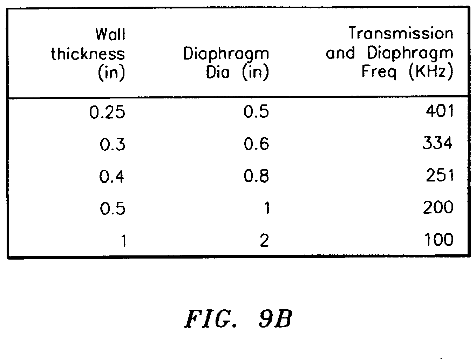

In addition to impeding the propagation of the structural wave component 100 from the transmitting sensor 122 to the receiving sensor 124, the design of the structurally significant housing 132 can be optimized to increase the transmission of fluid borne ultrasonic wave component 102. Referring to Figure 9, with the structurally significant housing 132 in place, the unreinforced section 103 of the pipe 104 wall effectively appears as a clamped diaphragm.

Blevins, Formulas for Natural Frequency and Mode Shapes provides formulas for the natural frequency of a clamp-on diaphragm. For example, for a clamp-on diaphragm having a diameter, a, and thickness, h, for a material of modulus, E, Poisson ratio, v, and a mass per unit area, g, the natural frequency may be given by,

$$f_{ij} = \frac{\lambda_{ij}^2}{2\pi a^2} \left[ \frac{Eh^3}{12g(1-v^2)} \right]$$

where $f_{ij}$ is tabulated.

This formulation neglects the real world stiffening effect of the curvature of the pipe 104 wall in the unreinforced area and thus will likely under predict the natural frequency for a given geometry. However, recognizing this limitation, initial calculations show that a for pipe 104 wall of ~7.6 mm (0.3 inches), and unreinforced sensor areas of roughly 19 mm (0.75 inches) diameter, a flat plate circular disk has resonant frequencies on the order of 10,000 Hz to 500,000 Hz, which is within the range of ultrasonic transducers. Thus, tuning the natural frequency of the diaphragm system that is formed using a structurally significant housing 132 with the primary transmission frequency of the ultrasonic sensors 114-120 - created by either driving the transducer at a specific frequency, or pulsing the transducer, is both practical and feasible with commonly available ultrasonic transducers and the design proposed herein.

The standard, unreinforced pipe does demonstrate frequency selectivity with respect to normal incidence ultrasonic waves. The transmission of normal incident ultrasonic waves 102 is maximized at frequencies that correspond to the wavelength of compression waves in the pipe 104 wall being an integral number of halfwave lengths,

$$\lambda = \frac{2t}{n}$$

or

$$f = n\frac{c}{2t},$$

Thus, for a 7.6 mm (0.3 inches) thick steel pipe, maximum transmission occurs at 340 KHz, 680 KHz, 1020 KHz, etc.

The effect of the structurally significant housing 132 would be maximized if the resonant frequency of the diaphragm system designed above coincided with one of the frequency of maximum transmission.

The design task of aligning the two resonant frequencies becomes one of selecting the diameter of the "diaphragm" such that the natural frequency of the "diaphragm" lines up with the frequency of maximum transmission. Inspection of the above equations shows that this condition is essentially met for "diaphragms" with radii equal to the thickness of the pipe 104 wall.

Thus, under the simplified, but still realistic assumptions discussed herein, one optimal "diaphragm" diameter may be equal to 2 times the thickness of the pipe 104. These values are tabulated in Table 1, shown in Figure 9B.

Note that as the pipe 104 wall gets thicker, the optimal "diaphragm" diameter increases. Given the size of conventional transducers, this effect may be better leveraged for thick wall pipes, such as those used in high-pressure oil and gas wells.

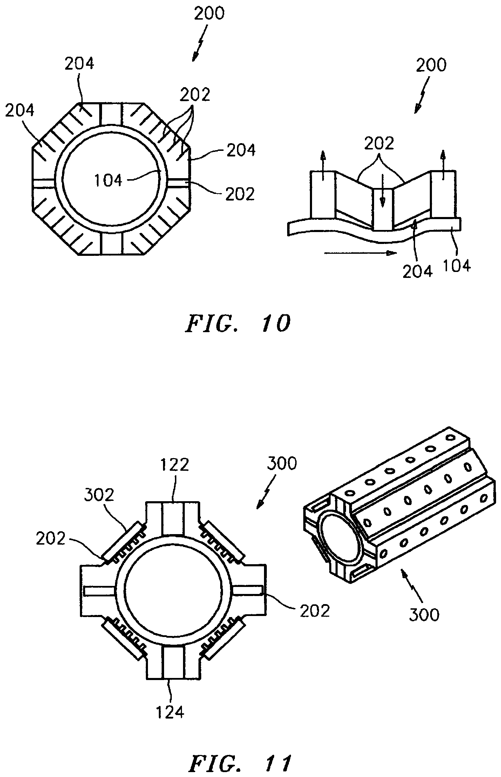

Referring to Figure 10, an additional embodiment of a structurally significant housing 200 is shown, wherein the presence of the structurally significant housing 200 provides multiple impedance changes, alternate energy dissipation paths, and augmented damping to reduce the level of structurally borne noise present to interfere with the fluid borne signal required to make a flow measurement. Specifically, the structurally significant housing 200 includes viscoelastic damping material 202 introduced into slots 204 in the housing 200. For structural waves 100 propagating through the housing, the design of the slots 204 provide for shearing of the viscoelastic material 202, effectively augmenting the damping of the structural wave 100.

Referring to Figure 11, another embodiment of a structurally significant housing 300 is shown with viscoelastic damping material 202 attached between the housing 300 and structurally significant plates 302. The structurally significant housing 300 and the structurally significant plates 302 serve to constrain the viscoelastic material 202 when deflected, effectively augmenting the damping of the structural wave 100.

While the present invention of a structurally significant housing 132, 200, 300 attenuates the structurally borne ultrasonic signals 100 propagating circumferentially around the pipe 104, one should appreciate that the housing 132, 200, 300 will also attenuate or eliminate axially propagating structurally borne ultrasonic signals 100. Further, while the housing 132, 200, 300 is shown as a single housing comprised of two halves bolted together to retain the ultrasonic sensors 114-120 of the array of sensors 112, one should appreciate that the present invention contemplates that the ultrasonic meter may comprise a plurality of discreet independent structurally significant housings, wherein each sensor 114-120 of the array 112 may be mounted to the pipe 104 by a respective structurally significant housing 132, 200, 300. It is further contemplated that a housing 132, 200, 300 may also include any number of ultrasonic sensors 114-120 less than the total number of the array 112.

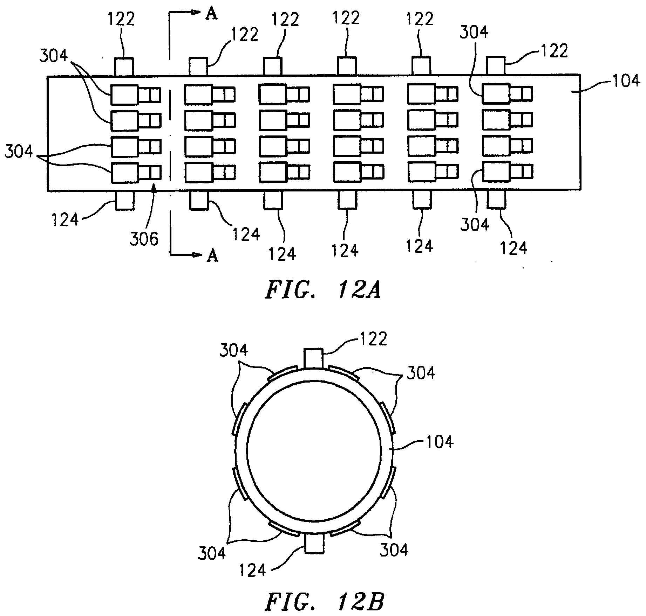

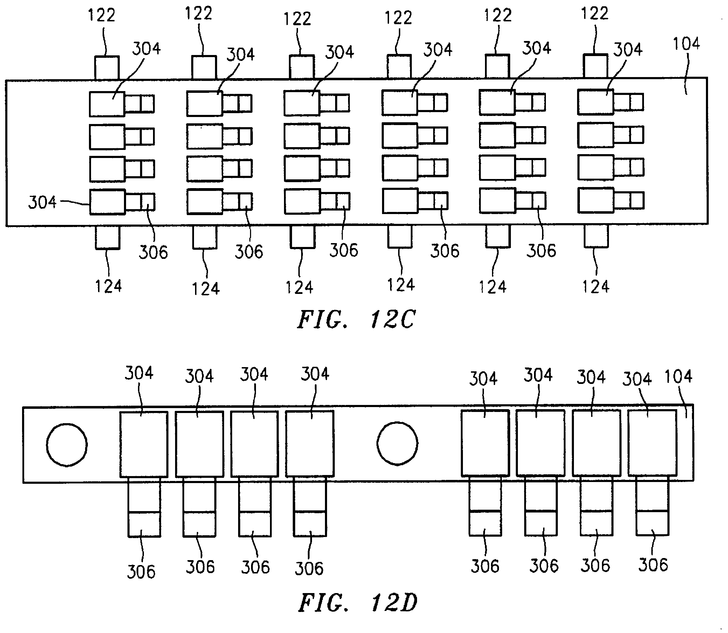

Referring to Figures 12A, 12B, 12C and 12D, an additional approach of attenuating or damping the structurally borne ultrasonic signal or vibration 100 includes the use of piezo films 304 applied to the outer surface of the pipe 104. Piezo devices 304 bonded to a vibrating structure and electrically shunted to dissipate charge generated by deformation are well known to serve as effective dampening devices for structural vibration, (e.g. Piezo damping of Fan blades). By tuning the electrical properties of the piezo RLC circuit 306, the circuit 306 can be optimized to preferentially damp structural vibration of a specific frequency.

One objective of the current invention is to bond piezoelectric materials (e.g. PVDF film) 304 to the pipe 104 wall along the region of the wall in which the interfering structurally borne ultrasonic vibration 100 (see Figure 8) would travel. The circuitry 306 could be broadband in nature or tuned to optimize attenuation of vibrations at specific frequencies.

Alternatively to the passive electronic system described above, the pvdf film 304 could also be used in an active circuit to preferentially damp out specific structural vibration. One piezoelectric film 304 is similar to that shown in U.S. Patent Application No. 10/712,833 (US 2004/0168523 A1), filed on November 12, 2003.

In one configuration envisioned, the pvdf system is applied to the pipe 104 as a separate sub system of the existing ultrasonic flow metering system. Typical, piezo transducers are used to launch and detect ultrasonic signals. The proposed use of piezo dampers constitute a separate system designed to reduce or eliminate the structure borne component 100 of the ultrasonic signal, unintentionally generated as a by-product of generating the fluid borne component 200, arriving at the ultrasonic detector 124 ideally intended to respond to only fluid borne ultrasonic devices. An illustration of one embodiment of this concept is shown in Figures 12A, 12B, 12C and 12D.

The compressional wavelength in steel at 1 MHz is approximately 5 mm (0.2 inches). Ideally, the spatial extent of the PVDF patches should target an odd integral number of half wavelengths, namely ~2.5, 7.6, 12.4 mm (~0.1, 0.3, 0.5 inches) etc.

Referring back to Figure 1, the flow logic in the processor 130 may determine the velocity of each sensor in the array of sensors 114-120 using one or both of the following techniques to determine the convection velocity of vortical disturbances within the process flow 126 or other characteristics of the process flow 126 that moves/convects with the process flow 126 by 1) Characterizing the convective ridge of the vortical disturbances or other characteristics using array processing techniques that use an array 112 of ultrasonic sensors 114-120 and/or 2) cross-correlating unsteady variations in the ultrasonic signals using ultrasonic sensors 114-120. It should be appreciated that while the sensors 114-120 have been shown and described, the present invention is not limited in this regard and the number of sensors can vary. For example, any number of sensors may be used, such as 2 to 16 sensors, without departing from the scope of the invention.

Referring to Figure 13, a block diagram illustrating the flow logic 308 in the processor 130 of Figure 1 is shown and is used to characterize the convective ridge of the unsteady variations of the ultrasonic signals and determine the flow rates. As shown in Figure 13, the flow logic 308 includes a data acquisition unit 310 (e.g., A/D converter) that converts the analog signals $T_1(t)...T_N(t)$ to respective digital signals and provides the digital signals $T_1(t)...T_N(t)$ to FFT logic 312. The FFT logic 312 calculates the Fourier transform of the digitized time-based input signals $T_1(t)...T_N(t)$ and provides complex frequency domain (or frequency based) signals $T_1(\omega), T_2(\omega), T_3(\omega), ... T_N(\omega)$ indicative of the frequency content of the input signals. It should be appreciated that instead of FFT's, any other technique for obtaining the frequency domain characteristics of the signals $T_1(t)$ - $T_N(t)$, may be used. For example, the cross-spectral density and the power spectral density may be used to form a frequency domain transfer functions (or frequency response or ratios) discussed hereinafter.

One technique of determining the convection velocity of the coherent structures (e.g., turbulent eddies) 314 within the flow 126 is by characterizing a convective ridge of the resulting unsteady variations using an array 112 of sensors 114-120 or other beam forming techniques, similar to that described in U.S. Patent Application, Serial No. 09/729,994, (US 2002/0095263 A1) filed December 4, 2000, now US Patent Number 6,609,069.

A data accumulator 316 accumulates the frequency signals $T_1(\omega)$ - $T_N(\omega)$ over a sampling interval, and provides the data to an array processor 318, which performs a spatial-temporal (two-dimensional) transform of the sensor data, from the x-t domain to the k-ω domain, and then calculates the power in the k-ω) plane, as represented by a k-ω plot.

The array processor 318 may use standard so-called beam forming, array processing, or adaptive array-processing algorithms, i.e. algorithms for processing the sensor signals using various delays and weighing to create suitable phase relationships between the signals provided by the different sensors, thereby creating phased antenna array functionality. In other words, the beam forming or array processing algorithms transform the time domain signals from the sensor array 112 into their spatial and temporal frequency components, i.e. into a set of wave numbers given by $k=2\pi/\lambda$, where $\lambda$ is the wavelength of a spectral component, and corresponding angular frequencies given by

$$\omega=2\pi v.$$

It should be appreciated that the prior art teaches many algorithms of use in spatially and temporally decomposing a signal from a phased array of sensors, and the present invention is not restricted to any particular algorithm. One particular adaptive array processing algorithm is the Capon method/algorithm. While the Capon method is described as one method, the present invention contemplates the use, or combined use, of other adaptive array processing algorithms, such as MUSIC algorithm. The present invention also recognizes that such techniques can be used to determine flow rate, i.e. that the signals caused by a stochastic parameter convecting with a flow 126 are time stationary and may have a coherence length long enough so that it is practical to locate sensors 114-120 apart from each other and yet still be within the coherence length.

Convective characteristics or parameters have a dispersion relationship that can be approximated by the straight-line equation,

$$k=\omega/u,$$

where u is the convection velocity (flow velocity). Referring to Figure 14, a k-ω plot is a plot of k-ω pairs obtained from a spectral analysis of sensor samples associated with convective parameters that are portrayed so that the energy of the disturbance spectrally corresponds to pairings that might be described as a substantially straight ridge, wherein the ridge, in turbulent boundary layer theory, is called a convective ridge.

To calculate the power in the k-ω plane, as represented by a k-ω plot (see Figure 14) of either of the signals, the array processor 318 determines the wavelength and so the (spatial) wavenumber k, and also the (temporal) frequency and so the angular frequency ω, of various of the spectral components of the stochastic parameter. There are numerous algorithms available in the public domain to perform the spatial/temporal decomposition of arrays of sensors 114-120.

The present embodiment may use temporal and spatial filtering to precondition the signals to effectively filter out the common mode characteristics and other long wavelength (compared to the sensor spacing) characteristics in the pipe 104 by differencing adjacent sensors 114-120 and retaining a substantial portion of the stochastic parameter associated with the flow field and any other short wavelength (compared to the sensor spacing) low frequency stochastic parameters.

In the case of suitable coherent structures 314 being present, the power in the k-ω plane shown in the k-ω plot of Figure 14 shows a convective ridge 320. The convective ridge 320 represents the concentration of a stochastic parameter that convects with the flow 126 and is a mathematical manifestation of the relationship between the spatial variations and temporal variations described above. Such a plot will indicate a tendency for k-ω pairs to appear more or less along a line 320 with some slope, wherein the slope indicates the flow velocity.

Once the power in the k-ω plane is determined, a convective ridge identifier 322 uses one or another feature extraction method to determine the location and orientation (slope) of any convective ridge 320 present in the k-ω plane. In one embodiment, a so-called slant stacking method is used, a method in which the accumulated frequency of k-ω pairs in the k-ω plot along different rays emanating from the origin are compared, each different ray being associated with a different trial convection velocity (in that the slope of a ray is assumed to be the flow velocity or correlated to the flow velocity in a known way). The convective ridge identifier 322 provides information about the different trial convection velocities, information referred to generally as convective ridge information.

An analyzer 324 examines the convective ridge information including the convective ridge orientation (slope). Assuming the straight-line dispersion relation given by k=ω/u, the analyzer 324 determines the flow velocity and/or volumetric flow, which are output as parameters 326. The volumetric flow is determined by multiplying the cross-sectional area of the inside of the pipe 104 with the velocity of the process flow 126.

As previously noted, for turbulent Newtonian fluids, there is typically not a significant amount of dispersion over a wide range of wavelength-to-diameter ratios. As a result, the convective ridge 320 in the k-ω plot is substantially straight over a wide frequency range and, accordingly, there is a wide frequency range for which the straight-line dispersion relation given by k=ω/u provides accurate flow velocity measurements.

For stratified flows, however, some degree of dispersion exists such that coherent structures 314 convect at velocities which depend on their size. As a result of increasing levels of dispersion, the convective ridge 320 in the k-ω plot becomes increasingly nonlinear.

2) Cross-correlating unsteady pressure variations using an array of unsteady pressure sensors.

Referring to Figure 15, a processor 400 is provided which uses cross-correlation of unsteady variations of the ultrasonic signals to determine the flow rates. The processing unit 400 of Figure 15 determines the convection velocity of the vortical disturbances within the flow 126 by cross correlating unsteady ultrasonic variations using an array of ultrasonic sensors 114-120, similar to that shown in U.S. Patent No. 6,889,562, filed November 8, 2001.

Referring to Figure 15, the processing unit 400 has two measurement regions located a distance ΔX apart along the pipe 104. Each pair of sensors 114, 116 and 118, 120 of each region act as spatial filters to remove certain acoustic signals from the unsteady pressure signals, and the distances $X_1$, $X_2$ are determined by the desired filtering characteristic for each spatial filter, as discussed hereinafter.

In particular, in the processing unit 400, the ultrasonic signal $T_1(t)$ is provided to a positive input of a summer 402 and the ultrasonic signal $T_2(t)$ is provided to a negative input of the summer 402. The output of the summer 402 is provided to line 404 indicative of the difference between the two ultrasonic signals $T_1$, $T_2$ (e.g., $T_1-T_2=T_{as1}$).

The line 404 is fed to a bandpass filter 406, which passes a predetermined passband of frequencies and attenuates frequencies outside the passband. In accordance with the present invention, the passband of the filter 406 may be set to filter out (or attenuate) the dc portion and the high frequency portion of the input signals and to pass the frequencies therebetween. Other passbands may be used in other embodiments, if desired. Bandpass filter 406 provides a filtered signal $T_{asf}1$ on a line 408 to Cross-Correlation Logic 410, described hereinafter.

The ultrasonic signal $T_3(t)$ is provided to a positive input of a summer 412 and the ultrasonic signal $T_4(t)$ is provided to a negative input of the summer 412. The output of the summer 412 is provided on a line 414 indicative of the difference between the two ultrasonic signals $T_3$, $T_4$ (e.g., $T_3-T_4=T_{as2}$). The line 414 is fed to a bandpass filter 416, similar to the bandpass filter 406 discussed hereinbefore, which passes frequencies within the passband and attenuates frequencies outside the passband. The filter 416 provides a filtered signal $T_{asf2}$ on a line 418 to the Cross-Correlation Logic 410. The signs on the summers 402, 412 maybe swapped if desired, provided the signs of both summers are swapped together. In addition, the ultrasonic signals $T_1$, $T_2$, $T_3$, $T_4$ may be scaled prior to presentation to the summers 402, 412.

The Cross-Correlation Logic 410 calculates a known time domain cross-correlation between the signals $T_{asf1}$ and $T_{asf2}$ on the lines 408, 418, respectively, and provides an output signal on a line 420 indicative of the time delay $\tau$ it takes for an vortical flow field 314 (or vortex, stochastic, or vortical structure, field, disturbance or perturbation within the flow) to propagate from one sensing region to the other sensing region. Such vortical flow disturbances, as is known, are coherent dynamic conditions that can occur in the flow which substantially decay (by a predetermined amount) over a predetermined distance (or coherence length) and convect (or flow) at or near the average velocity of the fluid flow. As described above, the vortical flow field 314 also has a stochastic or vortical pressure disturbance associated with it. In general, the vortical flow disturbances 314 are distributed throughout the flow, particularly in high shear regions, such as boundary layers (e.g., along the inner wall of the tube 104) and are shown herein as discrete vortical flow fields 314. Because the vortical flow fields (and the associated pressure disturbance) convect at or near the mean flow velocity, the propagation time delay $\tau$ is related to the velocity of the flow by the distance $\Delta X$ between the measurement regions, as discussed hereinafter.

Referring to Figure 15, a spacing signal $\Delta X$ on a line 422 indicative of the distance $\Delta X$ between the sensing regions is divided by the time delay signal $\tau$ on the line 420 by a divider 424 which provides an output signal on the line 426 indicative of the convection velocity $U_c(t)$ of the saturated vapor/liquid mixture flowing in the pipe 104, which is related to (or proportional to or approximately equal to) the average (or mean) flow velocity $U_f(t)$ of the flow 126, as defined below:

$$U_c(t) = \Delta X / \tau \propto U_f(t)$$

The present invention uses temporal and spatial filtering to precondition the ultrasonic signals to effectively filter out the acoustic disturbances $P_{acoustic}$ and other long wavelength (compared to the sensor spacing) disturbances in the pipe 104 at the two sensing regions and retain a substantial portion of the ultrasonic signal $T_{vortical}$ associated with the vortical flow field 314 and any other short wavelength (compared to the sensor spacing) low frequency pressure disturbances $T_{other}$. In accordance with the present invention, if the low frequency pressure disturbances $T_{other}$ are small, they will not substantially impair the measurement accuracy of $T_{vortical}$.

While the cross-correlation was shown using four sensors, whereby two sensors were summed together to form a sensing region, the invention contemplates that each sensing region may only be comprised of one (or more) sensors disposed at an axial location along the pipe 104.

As mentioned hereinbefore, the present invention contemplates that the housing and blocks for attenuating the structural ultrasonic signals may be used with any configuration of ultrasonic sensors 114-120. Specifically any of the three classes of flow meters that utilize ultrasonic transducers, which include transit time ultrasonic flow meters (TTUF), doppler ultrasonic flow meters (DUF), and cross correlation ultrasonic flow meters (CCUF).

CCUF's measure the time required for ultrasonic beams to transit across a flow path at two, axially displaced locations along a pipe 104. Within this measurement principle, variations in transit time are assumed to correlate with properties that convect with the flow 126, such as vortical structure, inhomogenities in flow composition, temperature variations to name a few.

CCUF's utilize high frequency acoustic signals, i.e. ultrasonics, to measure much lower frequencies, time varying properties of structures in the flow 126. Like all other cross correlation based flow meters, the physical disturbances which cause the transit time variations should retain some level of coherence over the distance between the two sensors.

Cross correlation ultrasonic flow meters have been around since the early 1960's. CCUF's are typically much more robust to variations in fluid composition than the other ultrasonic-based flow measurement approaches such as transit time and Doppler based methods.

Although CCFU's are operationally more robust than other ultrasonic interpretation techniques, they suffer from drawbacks attributed to most cross correlation flow meters, i.e., they are have slow update rates and relatively inaccurate.

Transit time, defined as the time required for an ultrasonic beam to propagate a given distance, can be measured using a radially aligned ultrasonic transmitter and receiver. For a homogenous fluid with a no transverse velocity components flowing in an infinitely rigid tube, the transit time may be given by the following relation:

$$t = D / A_{mix}$$

where t is the transit time, D is the diameter of the pipe 104, and $A_{mix}$ is the speed of sound propagating through the fluid 126.

In such a flow, variation in transit time is analogous to a variation in sound speed of the fluid. In real fluids however, there are many mechanisms, which could cause small variations in transit time which remain spatially coherent for several pipe diameters. For single phase flows, variations in the transverse velocity component will cause variations in transit time. Variations in the thermophysical properties of a fluid such as temperature or composition will also cause variations. Many of these effects convect with the flow. Thus, influence of transverse velocity of the fluid associated with coherent vortical structures 314 on the transit time enables transit time based measurements to be suitable for cross correlation flow measurement for flows with uniform composition properties. The combination of sensitivity to velocity field perturbation and to composition changes make transit time measurement well suited for both single and multiphase applications.

Despite CCUF's functioning over a wide range of flow composition, standard transit time ultrasonic flow meters (TTUF) are more widely used. TTUF's tend to require relatively well behaved fluids (i.e. single phase fluids) and well-defined coupling between the transducer and the fluid itself. TTUF's rely on transmitting and receive ultrasonic signals that have some component of their propagation in line with the flow. While this requirement does not pose a significant issue for in-line, wetted transducer TTUF's, it does pose a challenge for clamp-on devices by introducing the ratio of sound speed in the pipe to the fluid as an important operating parameter. The influence of this parameter leads to reliability and accuracy problems with clamp-on TTUF's.

CCFU's, utilize ultrasonic transducers to launch and detect ultrasonic waves propagating normal to the flow path. Refraction of ultrasonic waves at the pipe / fluid interface is not an issue and the ratio between sound speed of pipe and the fluid does not direct effect operability.

In still another embodiment, each pair of transducers 114-120 comprise a single transmitter 122 to emit an ultrasonic signal through the flow 126 and a receiver, 124 which receives the respective signal for processing. The time it takes for the signal to arrive at the receiver transducer 124 for each pair is calculated and fed to the SONAR algorithms (in the array processor 131) where the flow rate is calculated. One embodiment uses a very simplistic signal detection algorithm that looks for a peak in the reading obtained from the receiver 124. This algorithm works well when a good signal-to-noise ratio is observed at the receiver 124, however when bubbles intersect the signal path between the transmitter 122 and receiver 124 a significant attenuation can occur, which will severely degrade the received signal quality. The amount of attenuation will vary depending on the bubble characteristics such as size and density.

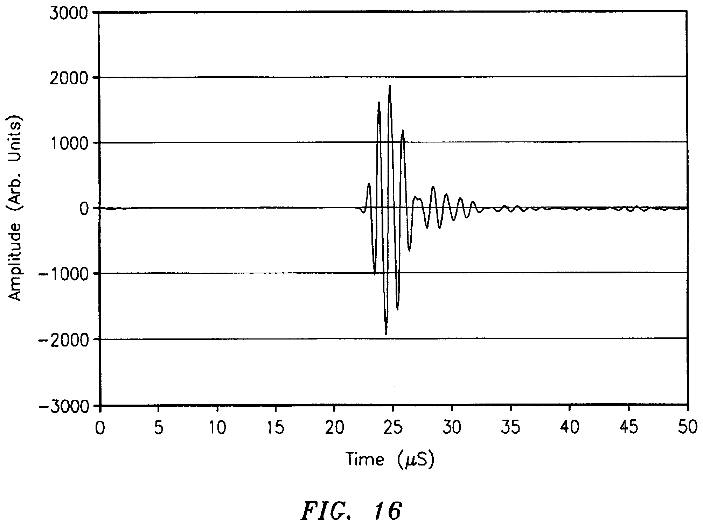

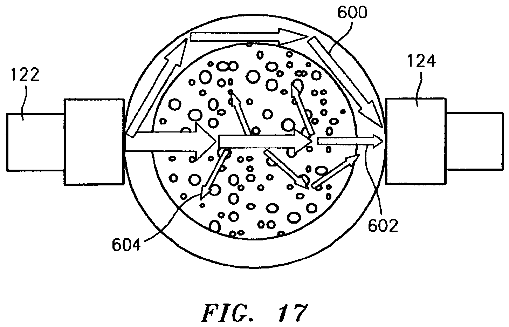

Referring to Figure 17, the transmitting ultrasonic transducer array 122 is periodically pulsed to create the ultrasonic signal that transmits through the pipe 104 and fluid. Each transducer will have a fundamental oscillation frequency, which when pulsed will emit a short ultrasonic burst signal. Figure 16 shows the signal created by a 1 MHz ultrasonic transducer when pulsed with a 10 nS width pulse created in the flow meter 110. In typical applications the receiving ultrasonic transducer 124, located on the opposite side of a pipe 104, will receive this signal once it has bisected the pipe 104 however in addition to this primary through-transmitted signal other unwanted secondary signals will also be detected. These secondary signals include portions of the original signal that have been refracted or reflected along a different path through the pipe 104 than the preferred direct transmission. Often these secondary signals possess sufficient strength to still reach the receiver transducer 124 and will interfere with the desired signal. Examples of these secondary signals include the ring-around signals 600 that travel within the pipe wall 104, reflected signals that may bounce off multiple interfaces such as the transducer-pipe interface or the pipe-liquid interface, or as in the case here where an array of transducers are used, from an adjacent transducer, as shown in Figure 17.

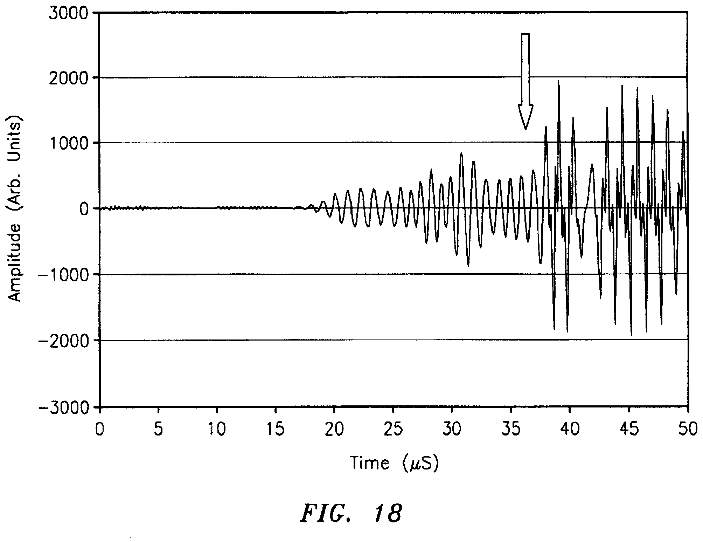

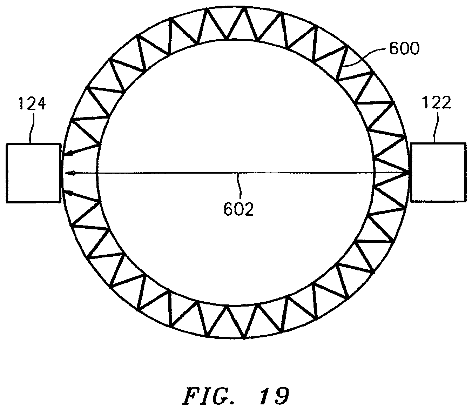

The dominant secondary signal is the 'ring-around' signal 600. This is the portion of the ultrasonic signal that travels around through the wall of the pipe 104 and can still be detected by the receiving transducer 124. Figure 18 shows a diagram of this signal as compared to the through-transmitted signal. As shown in Figure 19, ultrasonic transmitting and receiving transmitters 122, 124, respectively, are shown attached to the outer surface of a pipe 104. They are arranged such that the generated ultrasonic signal will be normal to the direction of the fluid flow and travel through the center 602 of the liquid within the pipe 104. As discussed above, as the ultrasonic signal travels through the pipe 104, bubbles 604 and other matter within the pipe 104 will scatter and attenuate the signal before it fully traverses the pipe 104 and is detected by the receiving transducer 124. Also depicted is the 'ring-around' signal 600. This signal is created through reflection and diffraction between the transmitting ultrasonic transducer 122, the pipe wall 104 and the material present inside the pipe 104 due to the large impendence mismatch between the various materials. As an example, the impedance of steel is 45 MRayls in contrast to fluid which has an impedance of 1.5 MRayls. In this case, only a small percentage of the ultrasonic signal is actually injected into the fluid while the rest is reflected throughout the overall system. The majority of this excess energy is present in the pipe 104 wall in the form of shear and compressional ultrasonic waves 600. These waves will travel throughout the pipe 104 and will be seen by the receiving transducer 124 along with any desired signals. Coupled with the fact that the through-transmitted signal can be significantly attenuated as it travels through the fluid 126 in the pipe 104, it can be very difficult to distinguish the wanted signal from all the secondary signals. Figure 19 shows an example of a received ultrasonic signal 602 along with an unwanted 'ring-around' signal 600. The arrow indicates the location of the through-transmitted pulse in relation to the large 'ring-around' signal. Contrast this to the clean ultrasonic signal seen in Figure 16.

To increase the system robustness of the ultrasonic flow meter 110, the amount of the noise signal may be decreased by mechanically reducing the strength of the secondary ring-around ultrasonic signals that were able to reach the detectors.

*Signal to Noise*

It should be appreciated that the quality of any flow measurement, independent of the technology, is typically dependent upon the signal to noise ratio (S/N). Noise, in this case, is defined as any portion of the measured signal that contains no flow information. It is desirable to maximize the S/N to obtain optimum performance. As mentioned, the dominant noise source for the ultrasonic flow meter 110 was determined to be ring-around noise. Ring-around noise is defined as the signal seen by the receiving transducer 124 that has not passed through the fluid 126, but instead traveled via the pipe 104 wall. This signal contains no flow information and, in certain cases, can corrupt the measurement. Figure 19 shows both the signal path and ring-around path.

The ultrasonic flow meter 110 measures the modulation of the time-of-flight (TOF) measurement orthogonal to the flow direction. The TOF modulation is due to the vortical disturbances in the beam path and the flow velocity is determined by correlating these coherent modulations over the length of the sensor array.

Under ideal conditions, the ratio of the signal passing through the fluid 126 to the ring-around noise is high, and/or the differential TOF between the signals is large, and a flow measurement can be made. In situations where the straight through signal is attenuated due to properties of the fluid 124 (air bubbles, particulates, etc.) the S/N ratio can be substantially reduced and the flow measurement compromised. In cases where the signal and noise temporally overlap, and/or in situations where the ring-around signal is greater than the straight through signal, advanced signal processing algorithms need to be employed to detect the signal. In order to reduce the burden placed on the detection algorithm to detect small signals in the presence of a large ring-around signal, methods of reducing the amplitude of the ring-around noise were investigated.

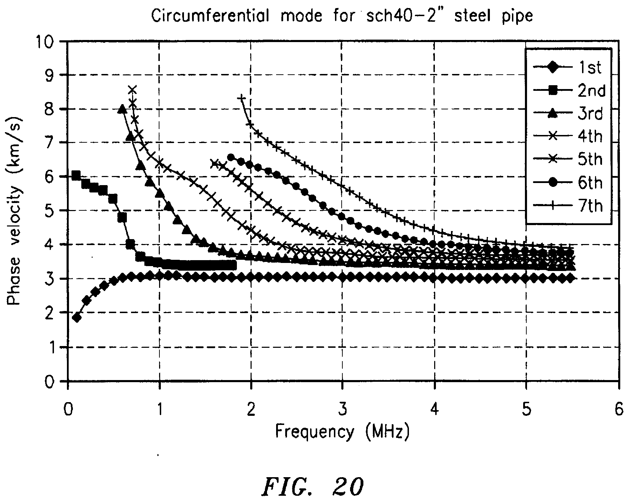

The properties of the ring-around energy differ depending upon the wall thickness of the pipe 104, transducer frequency, pipe surface quality, and transducer size. Generally speaking, higher levels of ring-around are seen at smaller pipe diameters (i.e. 51 mm or 2 inch) for a given transducer excitation frequency due to the tighter curvature of the wall. Ring-around signals can be generated when energy from the transducer is either directly coupled into the pipe wall and/or be a result of reflected energy from the inner pipe/liquid interface. This energy can propagate as a variety of different waves, such as shear, longitudinal and surface waves. Figure 20 shows the phase velocity of supported circumferential modes within the wall of a schedule 40, 51 mm (2 inch) steel pipe. It can be seen that at low excitation frequencies, such as 1 MHz, four modes can be supported in the pipe wall, wherein the number of modes capable of being supported increases with increased frequency. The phase velocity of the lower order modes converges to approximately 3000 meters/sec.

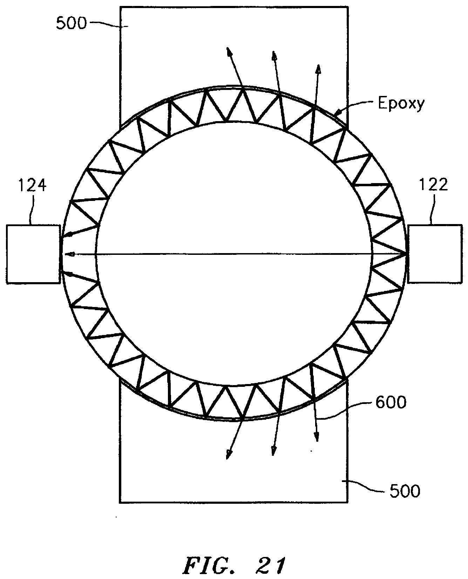

One approach to eliminate ring-around involves coupling the energy into a mechanical structure attached to the pipe 104. Referring to Figure 21, two steel blocks 500 were machined with a curvature slightly larger than the radius of a 51 mm (2 inch) pipe 104. Acoustic coupling gel was applied between the pipe 104 and the curved face of the blocks 500. The blocks 500 were then coupled to the pipe 104 which was then filled with water and the ring-around noise was measured and compared to the straight through signal. This was accomplished by first measuring and recording the received signal containing both the ring-around noise and the straight through signal, followed by a measurement with the straight through beam blocked. The difference between the measurements represents the contribution of the ring-around noise. The results of these tests showed the blocks had little impact on the attenuation of the acoustic energy propagating in the pipe 104 wall.

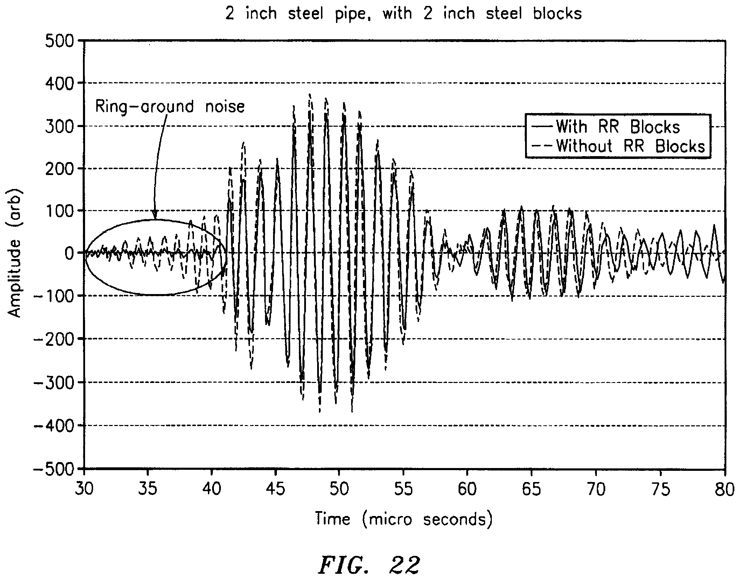

A second test was conducted where the blocks 500 were epoxied to the pipe 104 wall. Comparison of these measurements showed substantial attenuation of the ring-around energy. Figure 22 shows the received signal with and without epoxied ring-around blocks 500. The first arrival signal without ring-around blocks occurs at approximately 31 usecs. This is consistence with the calculated transit time through steel. The straight through signal containing the flow information has a transit time of 41 usec. Ring-around blocks attenuate the ring-around noise resulting in an improved signal to noise at the receiver 124. It should be appreciated that improvements in S/N of up to 20dB were realized with ring-around blocks.

It should also be appreciated that while the present invention contemplates using a block of material 500 (e.g., steel) attached or engaged to the pipe 104 to attenuate acoustic waves propagating through the pipe 104 wall, the invention further contemplates that the blocks 500 may be comprised of a sheet of material (e.g., steel, tin and lead) that is epoxied or otherwise engaged or attached to the pipe 104 wall. The sheet material may cover a substantial portion of the circumference and length of the array of sensors 114-120. The attenuation design may comprise of a plurality of respective sheets for each ultrasonic sensor pair and disposed on both sides of the pipe 104 between the sensor pair.

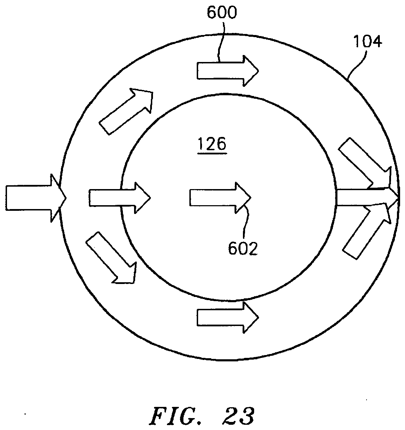

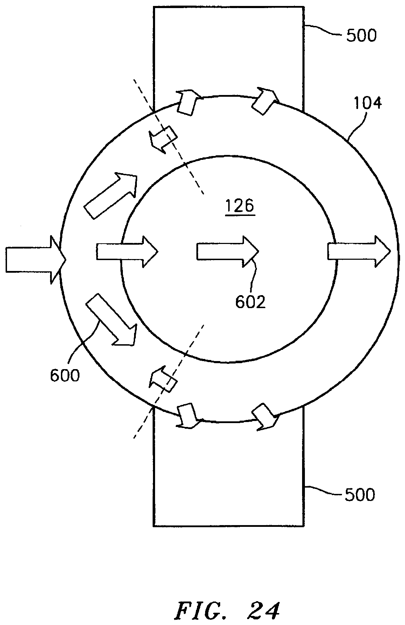

As discussed above and as seen in Figure 23 and Figure 24, for various measurements made on pipes 104 the transit time of an ultrasonic wave is determined and a related pipe parameter is derived (e.g. flow velocity). Often the ultrasonic energy is coupled through a pipe 104 wall and then into the confined fluid 126. The signal of interest is the signal that passes thru the fluid 126 (or other material contained in the pipe 104). Sometimes this signal is difficult to see because some of the ultrasonic energy is unavoidably coupled into the pipe 104 wall and travels around the circumference of the pipe 104 wall and ends up on top of the desired signal. This unwanted signal is sometimes referred to as ring-round.

By attaching blocks 500 with similar impedance to the pipe 104 to the pipe wall the ring-round can be reduced. The blocks 500 reduce the ring-round by basically two methods. First, for a wave traveling in the pipe wall, the block 500 because of its thickness, creates a different impedance and the energy is reflected. Second, the energy that is not reflected travels out into the block 500 and does not continue around the pipe 104. Note that the blocks 500 should be attached to the pipe with a solid material because a gel or liquid may not couple out the shear wave.

**Claims**

1. An apparatus for damping an ultrasonic signal propagating in the wall of a pipe (104), the apparatus comprising:

   a structurally significant housing (132; 200; 300) for securing at least one sensor having a transmitter component (122) and a receiver component (124) for transmitting and receiving an ultrasonic signal traveling substantially orthogonally to a fluid flow within the pipe, wherein said structurally significant housing (132; 200; 300), which is configured to essentially modify the structural properties of a structural path between the transmitter component (122) and the receiver component (124), is operative to be coupled with sufficient force to the outer wall of the pipe (104) for damping a portion of said ultrasonic signals propagating circumferentially within the wall of the pipe (104);
   **characterised in that** the structurally significant housing (132; 200; 300) reinforces all areas of the pipe (104) except for the immediate area of each transmitter component (122) and each receiver component (124), and the structurally significant housing (132; 200; 300) includes ports for receiving each transmitter component (122) and each receiver component (124), each of which ports defining an unreinforced pipe wall section (103).

2. The apparatus of claim 1, wherein said structurally significant housing (132; 200; 300) is coupled to the wall of the pipe (104) via an adhesive.

3. The apparatus of claim 1, wherein said structurally significant housing (200) includes at least one slot (204) containing a viscoelastic damping material (202).

4. The apparatus of claim 3, wherein said at least one slot (204) includes a plurality of slots (204) disposed at least partially along a circumference of said structurally significant housing (200).

5. The apparatus of claim 3, wherein said at least one slot (204) is disposed within the structurally significant housing (200) so as to be substantially normal to the portion of the ultrasonic signal traveling circumferentially within the wall of the pipe (104).

6. The apparatus of claim 1, wherein said structurally significant housing (300) includes at least one structural plate (302) attached to the pipe (104) wall and separated from the pipe (104) wall by a viscoelastic material.

7. The apparatus of claim 1, wherein said transmitter component (122) is associated with the pipe (104) wall substantially opposite said receiver component (124).

8. The apparatus of claim 1, wherein said structurally significant housing (132; 200; 300) is configured to augment damping in the pipe (104) wall by providing multiple impedance changes and alternate energy dissipation paths for an ultrasonic signal propagating in the pipe (104) wall.

9. The apparatus of claim 1, wherein each unreinforced pipe (104) wall section defined by the ports for receiving each transmitter component (122) and each receiver component (124) is sized to have a natural frequency that is tuned to coincide with a frequency of maximum transmission through the pipe wall for the transmitter component (122) and a receiver component (124).

10. The apparatus of claim 9, wherein the ports are sized to define unreinforced pipe (104) wall sections having a radius substantially equal to a thickness of the pipe (104) wall.

11. The apparatus of claim 1, wherein said ultrasonic signals are indicative of vortical disturbances with a fluid flowing in the pipe (104) and wherein a processor uses a beam forming algorithm to define a convective ridge in the k-w plane.

12. The apparatus of claim 1, further comprising:
    a processor (130) that defines a convective ridge in the k-w plane in response to said ultrasonic signals, and determines a slope of at least a portion of said convective ridge to determine a flow velocity of a fluid flowing within the pipe (104).

13. The apparatus of claim 12, wherein said processor (130) determines a flow rate of a fluid passing within the pipe (104) by sampling said ultrasonic signals and identifying and cross-correlating unsteady variations of said ultrasonic signals.

14. The apparatus of claim 12, wherein said processor (130) samples said ultrasonic signals to identify and determine an orientation of said convective ridge in the k-w plane.

**15.** The apparatus of claim 12, wherein said ultrasonic signals are indicative of vortical disturbances with said fluid flowing in the pipe (104) and wherein said processor (130) uses a beam forming algorithm to define said convective ridge in the k-w plane.

**Patentansprüche**

**1.** Vorrichtung zum Dämpfen eines sich in der Wand eines Rohrs (104) ausbreitenden Ultraschallsignals, wobei die Vorrichtung aufweist:

ein strukturell bedeutsames Gehäuse (132; 200; 300) zum Befestigen mindestens eines Sensors mit einer Senderkomponente (122) und einer Empfängerkomponente (124) zum Senden und Empfangen eines Ultraschallsignals, das sich im Wesentlichen orthogonal zu einer Fluidströmung in dem Rohr fortbewegt, wobei das strukturell bedeutsame Gehäuse (132; 200; 300), das dazu ausgelegt ist, die strukturellen Eigenschaften eines Strukturpfads zwischen der Senderkomponente (122) und der Empfängerkomponente (124) wesentlich zu modifizieren, betriebswirksam ist, mit ausreichender Kraft mit der Außenwand des Rohrs (104) gekoppelt zu werden, um einen Teil der sich in der Wand des Rohrs (104) in Umfangsrichtung ausbreitenden Ultraschallsignale zu dämpfen; **dadurch gekennzeichnet, dass** das strukturell bedeutsame Gehäuse (132; 200; 300) alle Bereiche des Rohrs (104) mit Ausnahme des unmittelbaren Bereichs jeder Senderkomponente (122) und jeder Empfängerkomponente (124) verstärkt und das strukturell bedeutsame Gehäuse (132; 200; 300) Anschlüsse zum Aufnehmen jeder Senderkomponente (122) und jeder Empfängerkomponente (124) umfasst, wobei jeder der Anschlüsse einen unverstärkten Rohrwandabschnitt (103) definiert.

**2.** Vorrichtung nach Anspruch 1, wobei das strukturell bedeutsame Gehäuse (132; 200; 300) mittels eines Haftmittels mit der Wand des Rohrs (104) gekoppelt ist.

**3.** Vorrichtung nach Anspruch 1, wobei das strukturell bedeutsame Gehäuse (200) mindestens einen Schlitz (204) umfasst, der ein viskoelastisches Dämpfungsmaterial (202) umfasst.

**4.** Vorrichtung nach Anspruch 3, wobei der mindestens eine Schlitz (204) eine Mehrzahl von Schlitzen (204) umfasst, die mindestens teilweise entlang eines Umfangs des strukturell bedeutsamen Gehäuses (200) angeordnet sind.

**5.** Vorrichtung nach Anspruch 3, wobei der mindestens eine Schlitz (204) so in dem strukturell bedeutsamen Gehäuse (200) angeordnet ist, dass er im Wesentlichen rechtwinklig zu dem Teil des sich in Umfangsrichtung in der Wand des Rohrs (104) fortbewegenden Ultraschallsignals verläuft.

**6.** Vorrichtung nach Anspruch 1, wobei das strukturell bedeutsame Gehäuse (300) mindestens eine Strukturplatte (302) umfasst, die an der Wand des Rohrs (104) angebracht ist und durch ein viskoelastisches Material von der Wand des Rohrs (104) getrennt ist.

**7.** Vorrichtung nach Anspruch 1, wobei die Senderkomponente (122) der Wand des Rohrs (104) zugeordnet ist, die im Wesentlichen gegenüber der Empfängerkomponente (124) liegt.

**8.** Vorrichtung nach Anspruch 1, wobei das strukturell bedeutsame Gehäuse (132; 200; 300) dazu ausgelegt ist, die Dämpfung in der Wand des Rohrs (104) durch Bereitstellen mehrerer Impedanzänderungen und wechselnder Energiedissipationspfade für ein sich in der Wand des Rohrs (104) ausbreitendes Ultraschallsignal zu verstärken.

**9.** Vorrichtung nach Anspruch 1, wobei jeder durch die Anschlüsse zum Aufnehmen jeder Senderkomponente (122) und jeder Empfängerkomponente (124) definierte unverstärkte Abschnitt der Wand des Rohrs (104) so bemessen ist, dass er eine natürliche Frequenz hat, die so eingestellt ist, dass sie mit einer Frequenz einer maximalen Übertragung durch die Rohrwand für die Senderkomponente (122) und eine Empfängerkomponente (124) übereinstimmt.

**10.** Vorrichtung nach Anspruch 9, wobei die Anschlüsse so bemessen sind, dass sie unverstärkte Abschnitte der Wand des Rohrs (104) mit einem Radius definieren, der im Wesentlichen gleich einer Dicke der Wand des Rohrs (104) ist.

**11.** Vorrichtung nach Anspruch 1, wobei die Ultraschallsignale auf Wirbelstörungen mit einem Fluid, das in dem Rohr (104) strömt, hinweisen und wobei ein Prozessor einen Strahlformungsalgorithmus verwendet, um eine Konvektionskurve in der k-w-Ebene zu definieren.

**12.** Vorrichtung nach Anspruch 1, die ferner aufweist: einen Prozessor (130), der eine Konvektionskurve in der k-w-Ebene als Reaktion auf die Ultraschallsignale definiert und eine Neigung mindestens eines Teils der Konvektionskurve bestimmt, um eine Strömungsgeschwindigkeit eines Fluids, das in dem Rohr (104) strömt, zu bestimmen.

**13.** Vorrichtung nach Anspruch 12, wobei der Prozessor (130) eine Strömungsrate eines Fluids, das das Rohr (104) durchströmt, durch Abtasten der Ultraschallsignale und Identifizieren und Kreuzkorrelieren schwankender Variationen der Ultraschallsignale bestimmt.

14. Vorrichtung nach Anspruch 12, wobei der Prozessor (130) die Ultraschallsignale abtastet, um eine Ausrichtung der Konvektionskurve in der k-w-Ebene zu identifizieren und zu bestimmen.

15. Vorrichtung nach Anspruch 12, wobei die Ultraschallsignale auf Wirbelstörungen mit dem Fluid hinweisen, das in dem Rohr (104) strömt, und wobei der Prozessor (130) einen Strahlformungsalgorithmus verwendet, um die Konvektionskurve in der k-w-Ebene zu definieren.

**Revendications**

1. Appareil destiné à amortir un signal ultrasonore se propageant dans la paroi d'un tuyau (104), l'appareil comprenant :

un logement significatif sur le plan structural (132; 200; 300) pour fixer au moins un capteur présentant un composant émetteur (122) et un composant récepteur (124) pour transmettre et recevoir un signal ultrasonore se déplaçant en grande partie orthogonalement à un écoulement de fluide dans le tuyau, dans lequel ledit logement significatif sur le plan structural (132; 200; 300), lequel est configuré pour modifier essentiellement les propriétés structurales d'un trajet structural entre le composant émetteur (122) et le composant récepteur (124), est en mesure de fonctionner pour être accouplé avec une force suffisante avec la paroi extérieure du tuyau (104) pour amortir une portion desdits signaux ultrasonores se propageant de manière circonférentielle dans la paroi du tuyau (104), **caractérisé en ce que** le logement significatif sur le plan structural (132; 200; 300) renforce toutes les zones du tuyau (104), excepté la zone immédiatement proche de chaque composant émetteur (122) et chaque composant récepteur (124), et le logement significatif sur le plan structural (132; 200; 300) inclut des orifices pour recevoir chaque composant émetteur (122) et chaque composant récepteur (124), chacun des orifices définissant une section de paroi non renforcée (103).

2. Appareil selon la revendication 1, dans lequel ledit logement significatif sur le plan structural (132; 200; 300) est accouplé avec la paroi du tuyau (104) via un adhésif.

3. Appareil selon la revendication 1, dans lequel ledit logement significatif sur le plan structural (200) inclut au moins une fente (204) contenant un matériau d'amortissement viscoélastique (202).

4. Appareil selon la revendication 3, dans lequel ladite au moins une fente (204) inclut une pluralité de fentes (204) disposée au moins partiellement le long d'une circonférence dudit logement significatif sur le plan structural (200).

5. Appareil selon la revendication 3, dans lequel ladite au moins une fente (204) est disposée dans le logement significatif sur le plan structural (200) de manière à être en grande partie normale par rapport à la portion du signal ultrasonore se déplaçant de manière circonférentielle dans la paroi du tuyau (104).

6. Appareil selon la revendication 1, dans lequel le logement significatif sur le plan structural (300) inclut au moins une plaque structurale (302) attachée sur la paroi du tuyau (104) et séparée de la paroi du tuyau (104) par un matériau viscoélastique.

7. Appareil selon la revendication 1, dans lequel ledit composant émetteur (122) est associé à la paroi du tuyau (104) en grande partie en face dudit composant récepteur (124).

8. Appareil selon la revendication 1, dans lequel ledit logement significatif sur le plan structural (132; 200; 300) est configuré pour augmenter l'amortissement dans la paroi du tuyau (104) en prévoyant des modifications d'impédance multiples, et faire alterner des trajets de dissipation d'énergie pour un signal ultrasonore se propageant dans la paroi du tuyau (104).

9. Appareil selon la revendication 1, dans lequel chaque section de paroi du tuyau (104) non renforcée définie par les orifices pour recevoir chaque composant émetteur (122) et chaque composant récepteur (124) est dimensionnée pour présenter une fréquence naturelle, laquelle est accordée pour coïncider avec une fréquence de transmission maximale à travers la paroi de tuyau pour le composant émetteur (122) et un composant récepteur (124).

10. Appareil selon la revendication 9, dans les orifices sont dimensionnés pour définir des sections de paroi du tuyau (104) non renforcées présentant un rayon en grande partie égal à une épaisseur de la paroi du tuyau (104).

11. Appareil selon la revendication 1, dans lequel lesdits signaux ultrasonores sont une indication de perturbations turbulentes avec un fluide s'écoulant dans le tuyau (104), et dans lequel un processeur utilise un algorithme formant un faisceau pour définir une arête convective dans le plan k-w.

12. Appareil selon la revendication 1, comprenant en outre :
un processeur (130), lequel définit une arête convective dans le plan k-w en réaction auxdits signaux ultrasonores, et détermine une pente d'au moins une portion de ladite arête convective pour déterminer une vitesse d'écoulement d'un écoulement s'écoulant dans le tuyau (104).

13. Appareil selon la revendication 12, dans lequel ledit processeur (130) détermine un débit d'un fluide passant dans le tuyau (104) en échantillonnant lesdits signaux ultrasonores, en identifiant et en effectuant une corrélation croisée de variations irrégulières desdits signaux ultrasonores.

14. Appareil selon la revendication 12, dans lequel processeur (130) échantillonne lesdits signaux ultrasonores afin d'identifier et de déterminer une orientation de ladite arête convective dans le plan k-w.

15. Appareil selon la revendication 12, dans lequel lesdits signaux ultrasonores sont une indication de perturbations turbulentes avec ledit fluide s'écoulant dans le tuyau (104), et dans lequel ledit processeur (130) utilise un algorithme formant un faisceau pour définir une arête convective dans le plan k-w.

**FIG. 1**

*FIG. 2*

EP 2 069 723 B1

FIG. 3

FIG. 4

FIG. 5

FIG. 6

FIG. 7

FIG. 8

*FIG. 9*

| Wall thickness (in) | Diaphragm Dia (in) | Transmission and Diaphragm Freq (KHz) |
|---|---|---|
| 0.25 | 0.5 | 401 |
| 0.3 | 0.6 | 334 |
| 0.4 | 0.8 | 251 |
| 0.5 | 1 | 200 |
| 1 | 2 | 100 |

*FIG. 9B*

FIG. 10

FIG. 11

FIG. 12A

FIG. 12B

122    122    122    122    122    122    104

304    304    304    304    304    304

304

306    306    306    306    306

124    124    124    124    124    124

*FIG. 12C*

304    304    304    304        304    304    304    304  104

306    306    306    306        306    306    306    306

*FIG. 12D*

$P_1(t)$ $P_2(t)$ $P_3(t)$ $P_N(t)$

Data Acquisition ──310

FFT ┤─312

308

$P_1(\omega)$ $P_2(\omega)$ $P_3(\omega)$ $P_N(\omega)$

Data Accumulator ──316

Array Processor

ω

Convective Ridge

k

318

Convective Ridge Identifier ──322

Velocity

Analyzer ──324

326 326 ··· 326

Flow Rate | Mach. No. | Volume Flow Rate

*FIG. 13*

FIG. 14

*FIG. 15*

*FIG. 16*

FIG. 17

*FIG. 18*

FIG. 19

Circumferential mode for sch40-2" steel pipe

FIG. 20

EP 2 069 723 B1

FIG. 21

2 inch steel pipe, with 2 inch steel blocks

Ring-around noise

With RR Blocks
— — Without RR Blocks

Amplitude (arb)

Time (micro seconds)

FIG. 22

FIG. 23

FIG. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 756977
- US 20040199340 A1
- US 83365106
- US 85624306
- US 85698706
- WO 2005061997 A1
- DE 102005057888 A1
- US 712833
- US 20040168523 A1
- US 729994
- US 20020095263 A1
- US 6609069 B
- US 6889562 B